# FASCICULE DE BREVET EUROPEEN

(11) **EP 1 094 044 B1**
(45) Date de publication et mention de la délivrance du brevet: **25.08.2004**
(21) Numéro de dépôt: 00402910.4
(22) Date de dépôt: 20.10.2000
(51) Int. Cl.: C04B 7/153, C04B 28/08

(54) **Coulis pour la réalisation d'écrans étanches**
Aufschlämmung für Dichtungswände
Slurry for tight screens

(30) Priorité: 21.10.1999 FR 9913126
(43) Date de publication de la demande: 25.04.2001
(73) Titulaire: COMPAGNIE DU SOL, 92000 Nanterre (FR)
(72) Inventeur: Vattement, Hubert, 77130 Montereau (FR)
(74) Mandataire: Nevant, Marc

(56) Documents cités:
- EP-A- 0 434 112
- EP-A- 0 545 827
- EP-A- 0 659 703
- WO-A-88/05425
- WO-A-94/09250
- US-A- 5 309 997

## Description

La présente invention concerne le domaine de la construction et du bâtiment. Plus précisément, l'invention concerne un coulis pour la réalisation d'écrans étanches ainsi qu'un procédé mettant en oeuvre ledit coulis.

Il est connu que le laitier de haut fourneau broyé se comporte comme un véritable ciment lorsqu'il est additionné d'une base telle que par exemple la soude ou le clinker.

On trouve ainsi usuellement dans le commerce des mélanges du type :
- laitier + clinker dans des proportions bien définies (Ciment CLK CEM III/C, CHF CEM III/A ou B ), ou
- laitier granulé + chaux, destinés aux travaux routiers.

La réalisation d'écrans étanches se fait par perforation directe avec du coulis bentonite ciment comme fluide d'excavation. La perforation est réalisée en continu d'où la nécessité d'avoir un matériau qui ne se rigidifie pas trop vite afin d'éviter les pertes de coulis sur les déblais d'excavation ainsi que l'évacuation de coulis qui aurait durci prématurément. Cette méthode spécifique aux écrans étanches nécessite, avec les matériaux actuellement disponibles, l'utilisation de retardateurs de prise et de rigidification .

En effet, lors de la réalisation d'écrans étanches, on recherche surtout une bonne étanchéité. La résistance est en général faible et ne représente pas un critère primordial. On utilise en général des ciments de laitier dont la composition génère des coulis dont la rhéologie est difficilement maîtrisable. L'utilisation d'adjuvants retardateurs est donc nécessaire pour obtenir une maniabilité compatible avec la perforation sous coulis.

Document US 5309997 décrit un coulis utilisé pour la perforation des roches comprenant de l'eau, un agent activant et un laitier de haut fourneau possédant une taille de grains maximale dont > 50% est entre 2 et 6 µm.

L'invention a pour but de remédier à ces inconvénients. Ainsi, l'invention a pour objet des coulis particulièrement adaptés à la réalisation d'écrans étanches, en particulier des coulis qui ne nécessitent pas d'adjonction de retardateurs.

Ainsi, l'invention concerne un coulis pour la réalisation d'écrans étanches qui comprend un mélange d'eau, d'une argile naturelle ou modifiée telle que la bentonite, d'un laitier de haut fourneau et d'un agent activant.

Conformément à l'invention, ledit laitier comprend des grains dont la taille maximale est comprise entre environ 50 µm et environ 100 µm, de préférence égale à environ 80 µm ; il est également préférable que le laitier possède une surface spécifique Blaine comprise entre environ 2500 et environ 4500 cm²/g.

Bien que la nature du laitier de haut fourneau ne soit pas particulièrement critique, il est préférable que celui-ci soit du type basique et que le rapport pondéral CaO/SiO₂ soit compris entre environ 1,10 et environ 1,35. A titre d'exemple de laitier utilisable dans le cadre de la présente invention, on peut citer un matériau comprenant comme composants principaux (en pourcentage en poids), 33 à 40 % de SiO₂, 8 à 16 % de Al₂O₃, 39 à 44 % de CaO, et 4 à 9 % de MgO.

Par ailleurs, il est également préférable que le module chimique du laitier (teneur (%) en CaO x teneur (%) en Al₂O₃) soit supérieur à environ 500.

L'agent activant permet la prise du laitier et est de préférence un agent activant basique tel que la soude, la potasse, le (bi)carbonate de sodium ou-de potassium, le gypse, la chaux vive, la chaux éteinte ou un mélange de ces composés. Il est également possible d'utiliser du ciment Portland comme agent activant.

Généralement, la quantité d'agent activant est comprise entre environ 1 % et environ 10 % en poids, par rapport au poids du laitier. Une quantité d'agent activant égale à environ 5 % en poids est particulièrement avantageuse.

Un tel coulis possède avantageusement un rapport pondéral ciment/eau (C/E) compris entre environ 0,1 et environ 0,25.

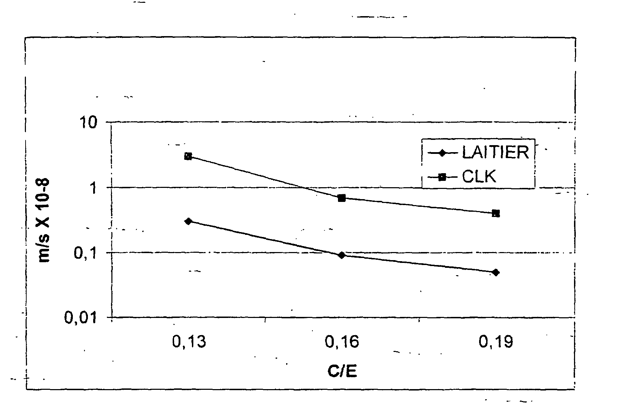

Dans ces conditions, il est possible d'obtenir un coulis présentant les propriétés suivantes :
- résistance plus élevée pour un même rapport ciment/eau,
- meilleure perméabilité à teneur en matières sèches équivalente (comme le montre la figure 1 qui représente l'évolution de la perméabilité en fonction du rapport C/E),
- évolution de la rigidité très lente bien adaptée à la perforation directe sous coulis. La faible réactivité du système permet de s'affranchir totalement de retardateurs. La suppression de tels adjuvants permet de respecter les nappes phréatiques en éliminant les rejets de polluants organiques.

Ce coulis peut être utilisé pour les travaux souterrains au contact de la nappe phréatique du fait de son caractère non polluant, ainsi que pour les travaux d'injection et la réalisation d'écrans étanches en béton plastique.

Le coulis est préparé sur le site de forage, par mélange des constituants définis ci-dessus.

L'invention sera mieux comprise à l'aide des exemples ci-après, donnés à titre purement illustratif.

Dans ces exemples, les constituants suivants sont utilisés :
boue de bentonite : mélange de 1000 1 d'eau et 45 kg de bentonite sodique
laitier : laitier de haut fourneau basique ayant un rapport pondéral CaO/SiO₂ égal à 1,19 et un module chimique égale à 515
activant : CPA CEMI
retardateur : lignosulfate mixte calcium/ammonium
accélérateur: silicate de sodium 35/37 °B

### Exemple 1 : Influence de la taille de grains maximale du laitier sur le temps de maniabilité du coulis

| Coulis | Laitier 40 µm | Laitier 80 µm | Laitier 120µm |
|---|---|---|---|
| Temps de maniabilité | 5 heures | 5 heures | 5 heures |
| Boue de bentonite | 9411 | 941 | 9411 |
| Laitier | 166,25kg | 166,25 kg | 166,25kg |
| Activant | 8,75 kg | 8,75 kg | 8,75 kg |
| Retardateur | 31 | 0 | 0 |
| accélérateur | 0 | 0 | 41 |

### Exemple 2 : formulations pour paroi d'étanchéité

| | invention | comparatif |
|---|---|---|
| Boue de bentonite | 941 l | 941 l |
| Laitier * | 166 kg | |
| Activant ( CPA CEM I ) | 9 kg | |
| CLK | | 175 kg |
| Retardateur | | 2 l |
| Temps de maniabilité | 5 h | 5 h |
| Résistance 28 j | 1,2 MPa | 1 MPa |
| Perméabilité | 5 10⁻¹⁰ m/s | 4 10⁻⁹ m/s |

| | | |
|---|---|---|
| *le laitier a une granulométrie continue qui s'étale de 0 à 80 µm et une surface spécifique Blaine égale à 4500 | | |

Le coulis conforme à l'invention, sans retardateur, possède un temps de maniabilité identique au coulis conventionnel comprenant du clinker (CLK) et un retardateur, ainsi qu'une meilleure résistance et une meilleure perméabilité que le coulis conventionnel.

## Revendications

1. Coulis pour écrans étanches, qui consiste en un mélange comprenant de l'eau, une argile naturelle ou modifiée, un laitier de haut fourneau possédant une taille de grains maximale comprise entre environ 50 µm et environ 100 µm, et un agent activant.

2. Coulis selon la revendication 1, dans lequel le laitier a une taille de grains maximale égale à environ 80 µm.

3. Coulis selon la revendication 1 ou 2, dans lequel le laitier possède un rapport pondéral CaO/SiO₂ compris entre environ 1,10 et environ 1,35.

4. Coulis selon l'une des revendications 1 à 3, dans lequel le laitier possède un module chimique supérieur à environ 500.

5. Coulis selon l'une des revendications 1 à 4, dans lequel l'argile modifiée est la bentonite.

6. Coulis selon l'une des revendications 1 à 5, dans lequel l'agent activant est un composé choisi parmi la soude, la potasse, le (bi)carbonate de sodium ou de potassium, le gypse, la chaux vive, la chaux éteinte, un mélange de ces composés, ou du ciment Portland.

7. Coulis selon l'une des revendications 1 à 6, dans lequel le mélange comprend de environ 1 % à environ 10 % en poids d'agent activant par rapport au poids du laitier de haut fourneau.

8. Coulis selon l'une des revendications 1 à 7, qui possède un rapport pondéral ciment/eau compris entre environ 0,1 et environ 0,25.

9. Procédé pour réaliser un écran étanche dans lequel la perforation est réalisée à l'aide du coulis tel que défini dans l'une des revendications 1 à 8.

10. Utilisation d'un laitier de haut fourneau ayant une taille de grains maximale comprise entre environ 50 µm et environ 100 µm pour la préparation d'un coulis destiné à la réalisation d'écrans étanches.

11. Utilisation selon la revendication 10, dans laquelle le laitier de haut fourneau est tel que défini dans l'une des revendications 2 à 4.

## Patentansprüche

1. Aufschlämmung für Dichtungswände, bestehend aus einem Gemisch umfassend Wasser, einen natürlichen oder modifizierten Ton, eine Hochofenschlacke mit einer maximalen Korngröße zwischen etwa 50 µm und etwa 100 µm, und ein Aktivierungsmittel.

2. Aufschlämmung nach Anspruch 1, wobei die Schlacke eine maximale Korngröße von etwa 80 µm aufweist.

3. Aufschlämmung nach Anspruch 1 oder 2, wobei die Schlacke ein Gewichtsverhältnis CaO/SiO₂ zwischen etwa 1,10 und etwa 1,35 aufweist.

4. Aufschlämmung nach einem der Ansprüche 1 bis 3, wobei die Schlacke einen chemischen Modul von mehr als etwa 500 aufweist.

5. Aufschlämmung nach einem der Ansprüche 1 bis 4, wobei der modifizierte Ton Bentonit ist.

6. Aufschlämmung nach einem der Ansprüche 1 bis 5, wobei das Aktivierungsmittel eine aus Soda, Pottasche, Natrium- oder Kalium(bi)carbonat, Gips, gebranntem Kalk, gelöschtem Kalk, einem Gemisch dieser Verbindungen oder Portlandzement ausgewählte Verbindung ist.

7. Aufschlämmung nach einem der Ansprüche 1 bis 6, wobei das Gemisch etwa 1 bis etwa 10 Gew.-% Aktivierungsmittel bezogen auf das Gewicht der Hochofenschlacke umfaßt.

8. Aufschlämmung nach einem der Ansprüche 1 bis 7, welche ein Gewichtsverhältnis Zement/Wasser zwischen etwa 0,1 und etwa 0,25 aufweist.

9. Verfahren zum Herstellen einer Dichtungswand, wobei die Perforation mit Hilfe der wie in einem der Ansprüche 1 bis 8 definierten Aufschlämmung erzielt wird.

10. Verwendung einer Hochofenschlacke mit einer maximalen Korngröße zwischen etwa 50 µm und etwa 100 µm zur Herstellung einer Aufschlämmung, die zur Herstellung von Dichtungswänden bestimmt ist.

11. Verwendung nach Anspruch 10, wobei die Hochofenschlacke wie in einem der Ansprüche 2 bis 4 definiert ist.

## Claims

1. A grout for watertight screens, which consists of a mixture comprising water, a natural or modified clay, a blast furnace slag having a maximum grain size of between about 50 µm and about 100 µm, and an activating agent.

2. The grout according to claim 1, in which the slag has a maximum grain size equal to about 80 µm.

3. The grout according to claim 1 or 2, in which the slag has a CaO/SiO₂ weight ratio of between about 1.10 and about 1.35.

4. The grout according to one of claims 1 to 3, in which the slag has a chemical modulus of greater than about 500.

5. The grout according to one of claims 1 to 4, in which the modified clay is bentonite.

6. The grout according to one of claims 1 to 5, in which the activating agent is a compound selected from sodium hydroxide, potassium hydroxide, sodium or potassium (bi)carbonate, gypsum, quicklime, slaked lime, a mixture of these compounds, or Portland cement.

7. The grout according to one of claims 1 to 6, in which the mixture comprises from about 1 % to about 10 % by weight of activating agent with respect to the weight of the blast furnace slag.

8. The grout according to one of claims 1 to 7, which has a cement/water weight ratio of between about 0.1 and about 0.25.

9. A method of making a watertight screen in which the perforation is carried out with the aid of the grout as defined in one of claims 1 to 8.

10. Use of a blast furnace slag having a maximum grain size of between about 50 µm and about 100 µm for preparing a grout intended for making watertight screens.

11. Use according to claim 10, in which the blast furnace slag is as defined in one of claims 2 to 4.
